# EUROPEAN PATENT APPLICATION

(11) **EP 3 238 872 A1**
(43) Date of publication of application: **01.11.2017**
(21) Application number: 15873026.7
(22) Date of filing: 21.12.2015
(51) Int. Cl.: B23K 35/363

(54) **FLUX FOR FAST-HEATING METHOD, AND SOLDER PASTE FOR FAST-HEATING METHOD**

(30) Priority: 26.12.2014 JP 2014265959
(71) Applicant: Senju Metal Industry Co., Ltd, Tokyo 120-8555 (JP)
(72) Inventor: KAKUISHI Mamoru, Tokyo 120-8555 (JP); MINEGISHI Kazuhiro, Tokyo 120-8555 (JP)
(74) Representative: D Young & Co LLP
(86) International application number: PCT/JP2015/085730
(87) International publication number: WO 2016/104458

(57) **Abstract**

The invention has an object to provide a flux for rapid heating method used in the rapid heating method such as a laser reflow, the flux being able to suppress any scattering of the solder alloy, and a solder paste for the rapid heating method. The flux contains rosin, a glycol-ether-based solvent, an organic acid, and a thixotropic agent, wherein the solvent is a glycol-based solvent having a low boiling point that is not more than 200 degrees C, content of the solvent having the low boiling point is not less than 20 weight % to not more than 40 weight %. The solder paste is obtained by mixing this flux with solder alloy powder. When the solvent having a high boiling point that is more than 200 degrees C is further contained, the solvent having the low boiling point of not less than 60 weight % in relation to the whole of the solvent is contained.

## Description

### [TECHNICAL FIELD]

The present invention relates to a flux for a rapid heating method used in the rapid heating method and a solder paste for the rapid heating method such as a laser reflow or the like.

### [BACKGROUND]

The solder paste is formed by mixing the solder alloy powder with the flux. A heating furnace called as a reflow furnace has been previously used in the soldering using the solder paste.

In the soldering using the reflow furnace, a substrate in which the solder paste is applied thereto and a subject to be joined such as an electronic component is mounted on the solder paste has been heated up to a temperature zone in which the solder alloy is melted, for period of time of about several minutes to melt the solder alloy.

On the other hand, a technology called as a laser reflow to irradiate laser to the solder paste on which the subject to be joined is mounted to melt the solder alloy has been proposed. The local heating can be carried out in the laser reflow so that the electronic component can be installed without adding any heat to the whole thereof as compared with the reflow furnace.

In the laser reflow, a portion to be heated is rapidly heated up to the melting zone of the solder alloy for a period of time of about several seconds. Such a rapid heating easily causes scattering of the flux to occur, thereby remarkably generating scattering of the molten solder.

Accordingly, the flux containing solvent having a boiling point that is higher than a melting point of the solder alloy has been proposed (See, for example, Patent Document 1).

### [DOCUMENTS FOR PRIOR ART]

### [PATENT DOCUMENTS]

Patent Document 1: Japanese Patent Application Publication No. 2014-100737

### [SUMMARY OF THE INVENTION]

### [PROBLEMS TO BE SOLVED BY THE INVENTION]

In the solder paste mixing the flux containing the solvent having a boiling point that is higher than the melting point of the solder alloy and the solder alloy powder, the solvent in the flux is suppressed from being volatilized when the laser is irradiated to the solder paste to heat it up to the temperature zone in which the solder alloy is melted.

However, the solvent, which is not volatilized and remains in the molten solder paste, is explosively boiled by the rapid heating, so that the molten solder alloy may be scattered. When scattering the molten solder alloy, the solder alloy may be adhered around the subject to be joined.

The present invention solves such problems and has an object to provide a flux for a rapid heating method used in the rapid heating method and a solder paste for the rapid heating method, which can suppress any scattering of the solder alloy.

### [MEANS FOR SOLVING THE PROBLEMS]

Inventors has found out that in the solder paste using a flux containing a solvent having a low boiling point, which is volatilized in the temperature zone in which the solder alloy is melted, the solder alloy is suppressed from being scattered even when the rapid heating such as the laser reflow is carried out.

This invention relates to a flux for a rapid heating method containing rosin, a glycol-ether-based solvent, an organic acid, and a thixotropic agent, wherein the solvent is a glycol-based solvent having a low boiling point that is not more than 200 degrees C, content of the solvent having the low boiling point is not less than 20 weight % to not more than 40
weight %, and the solvent having the low boiling point of not less than 60 weight % in relation to the whole of the solvent is contained.

In addition, it is preferable to select the solvent having the low boiling point from a group consisting of dipropylene glycol monomethyl ether, propylene glycol monobutyl ether, diethylene glycol dimethyl ether, ethylene glycol monoallyl ether and ethylene glycol monoisopropyl ether.

Further, the invention relates to a solder paste for a rapid heating method, which mixes a solder alloy with a flux, the flux containing rosin, a glycol-ether-based solvent, an organic acid, and a thixotropic agent, wherein the solvent is a glycol-based solvent having a low boiling point that is not more than 200 degrees C, content of the solvent having the low boiling point is not less than 20 weight % to not more than 40 weight %, and the solvent having the low boiling point of not less than 60 weight % in relation to the whole of the solvent is contained.

### [EFFECT OF THE INVENTION]

In the flux according to the invention, when it is used as the solder paste in which it is mixed with a solder alloy having a melting point exceeding 200 degrees C, the solvent in the flux volatilizes in the temperature zone in which the solder alloy is melted. Therefore, any solvent does not remain in the molten solder alloy and even when the rapid heating by the rapid heating method such as the laser reflow is carried out, it is possible to suppress the solder alloy from being scattered.

In addition, when it is used as the solder paste in which it is mixed with a solder alloy having a melting point of not more than 200 degrees C, the solvent in the flux does not perfectly volatilize in the temperature zone in which the solder alloy is melted but the solvent starts volatilizing even at a temperature that is lower than the boiling point of the solvent, so that an amount of the remained solvent is made smaller than a constant value, thereby suppressing the solder alloy from being scattered.

The rapid heating method is not limited to the laser reflow but it may be a method for carrying out rapid heating. As a soldering method for the rapid heating, the laser reflow, a halogen lamp, a hot air heating by heat gun or the like, heating by a soldering iron from a rear side of a substrate, and the like are exemplified.

### [EMBODIMENT FOR CARRYING OUT THE INVENTION]

### <Composition Example of Flux according to the Embodiment>

The flux according to this embodiment contains rosin, a glycol-ether-based solvent, an organic acid, and a thixotropic agent. The flux according to this embodiment is mixed with the solder alloy powder to form a solder paste.

The solvent dissolves solid components in the flux. The solvent is a glycol-based solvent having a low boiling point that is not more than 200 degrees C, and content of the solvent having the low boiling point in the flux is set to be not less than 20 weight % to not more than 40 weight %. As the solvent having the low boiling point, dipropylene glycol monomethyl ether, propylene glycol monobutyl ether, diethylene glycol dimethyl ether, ethylene glycol monoallyl ether, ethylene glycol monoisopropyl ether and the like are exemplified.

In addition, the solvent may further contain a solvent having a high boiling point that exceeds 200 degrees C. When containing the solvent having the high boiling point, content of the solvent having the low boiling point is set to be not less than 60 weight % in relation to the whole of the solvent.

As the solvent having the high boiling point, ethylene glycol monohexyl ether, diethylene glycol monohexyl ether, triethylene glycol monomethyl ether, ethylene glycol mono-2-ethylhexyl ether, diethylene glycol mono-2-ethylhexyl ether, diethylene glycol dibuthyl ether, triethylene glycol buthyl methyl ether, tetraethylene glycol dimethyl ether, and the like are exemplified.

The rosin protects the activator components such as the organic acid from heat to prevent the activator components from volatilizing. As the rosin, hydrogenated rosin, acid-modified rosin, polymerized rosin, rosin ester and the like are exemplified. Content of the rosin is set to be not less than 40 weight % to not more than 60 weight %.

The thixotropic agent is added to give thixotropy to give viscosity to the solder paste. As the thixotropic agent, higher fatty acid amide, higher fatty acid ester, hydrogenated castor oil and the like are exemplified. Content of the thixotropic agent is set to be not less than 5 weight % to not more than 10 weight %.

The organic acid is added as an activator component into the flux to remove oxide film from the solder alloy and the subject to be soldered. As the organic acid, an organic acid that is solid at normal temperature such as adipic acid, suberic acid, and sebacic acid is preferable. Content of the organic acid is set to be not less than 5 weight % to not more than 15 weight %.

As other additive agent, any activator other than the organic acid such as halogen, antioxidant, surfactant, defoaming agent or the like may be suitably added to the flux according to the invention unless the performance of flux is spoiled.

The solder paste according to this embodiment is formed by mixing the flux having the above-mentioned compositions with the solder alloy powder. The solder paste according to this embodiment is formed by mixing the flux with the solder alloy powder having solder alloy composition of Sn-3Ag-0.5Cu (each numerical value indicates weight %). The melting point of the solder alloy of Sn-3Ag-0.5Cu is 217 degrees C which is higher than the boiling point of the solvent having the low boiling point.

Further, the solder paste according to the embodiment is formed by mixing the flux with the solder alloy powder having solder alloy composition of Sn-57Bi (each numerical value indicates weight %). The melting point of the solder alloy of Sn-57Bi is 139 degrees C which is lower than the boiling point of the solvent having the low boiling point. It is to be noted that this invention is not limited to this solder alloy.

### EXECUTED EXAMPLES

The fluxes of the executed examples and the comparison examples, which have the compositions shown in the following table, were prepared. The solder pastes were prepared using the fluxes of the executed examples and the comparison examples and the effect of suppressing the solder balls was inspected. In each of the solder pastes, the solder powder and the flux was mixed so that a ratio of the solder powder and the flux was 89:11 (Solder Powder: Flux =89:11).

### (a) Measuring Method

Tester: JAPAN UNIX (Registered Trade Mark) ULD-730
Laser Spot Diameter: 0.8 mm
Pad Size: 0.8X0.8 mm Material: Cu
Irradiation Condition: Irradiation output was increased up to 1.5 W at a rate of 1 W/sec and stopped after three seconds elapsed from the irradiation start.

The solder paste was printed using a mask having a thickness of 0.1 mm and provided.

Measurement times were 4 times (N=4) and it is evaluated using an average of the measured values.

### (b) Evaluation Criteria

When the number of the solder balls was a value within a range of 0 to 5, it was indicated by double circle, "⊚".

When the number of the solder balls was a value within a range of 6 to 10, it was indicated by circle, "○".

When the number of the solder balls was a value over eleven, it was indicated by cross, "X".

Table 1 shows contents of the components and evaluation results.

**[Table 1]**

| | | EXECUTED EXAMPLE 1 | EXECUTED EXAMPLE 2 | EXECUTED EXAMPLE 3 | EXECUTED EXAMPLE 4 | EXECUTED EXAMPLE 5 | EXECUTED EXAMPLE 6 | EXECUTED EXAMPLE 7 | EXECUTED EXAMPLE 8 | EXECUTED EXAMPLE 9 | COMPARISON EXAMPLE 1 | COMPARISON EXAMPLE 2 | COMPARISON EXAMPLE 3 | COMPARISON EXAMPLE 4 |
|---|---|---|---|---|---|---|---|---|---|---|---|---|---|---|
| ROSIN | | 50 | 60 | 60 | 60 | 60 | 60 | 55 | 50 | 48 | 60 | 60 | 60 | 50 |
| ORGANIC ACID | | 10 | 10 | 13 | 10 | 10 | 10 | 10 | 10 | 7 | 10 | 10 | 10 | 10 |
| THIXOTROPIC AGENT | | 5 | 5 | 7 | 5 | 5 | 5 | 5 | 5 | 5 | 5 | 5 | 5 | 5 |
| SOLVENT HAVING LOW BOILING POINT | DIPROPYLENE GLYCOL MONOMETHYL ETHER | 35 | 25 | 20 | | | | 25 | 25 | 25 | | | | 20 |
| | PROPYLENE GLYCOL MONOBUTYL ETHER | | | | 25 | | | | | | | | | |
| | DIETHYLENE GLYCOL DIMETHYL ETHER | | | | | 25 | | | | | | | | |
| | ETHYLENE GLYCOL MONOISOPROPYL ETHER | | | | | | 25 | | | | | | | |
| SOLVENT HAVING HIGH BOILING POINT | ETHYLENE GLYCOL MONOHEXYL ETHER | | | | | | | 5 | | | 25 | | | |
| | DIETHYLENE GLYCOL MONOHEXYL ETHER | | | | | | | | 10 | | | 25 | | |
| | TETRAETHYLENE GLYCOL DIMETHYL ETHER | | | | | | | | | 15 | | | 25 | 15 |
| | TOTAL | 100 | 100 | 100 | 100 | 100 | 100 | 100 | 100 | 100 | 100 | 100 | 100 | 100 |
| EVALUATION OF SOLDER BALLS | POWDER: Sn-3Ag-0.5Cu | ⊚ | ⊚ | ⊚ | ⊚ | ⊚ | ⊚ | ⊚ | ⊚ | ⊚ | × | × | × | × |
| | POWDER: Sn-57Bi | ○ | ⊚ | ⊚ | ○ | ⊚ | ⊚ | ○ | ○ | ○ | × | × | × | × |
| RATE OF SOLVENT HAVING LOW BOILING POINT IN RELATION TO WHOLE OF SOLVENT | | 100 | 100 | 100 | 100 | 100 | 100 | 83 | 71 | 63 | 100 | 100 | 100 | 57 |

In all of the executed examples 1 to 6 in which the solvent having the low boiling point was contained but the solvent having the high boiling point was not contained, the contents of the solvent having the low boiling point in the flux varied within a predetermined range, occurrences of the solder balls were suppressed to a range of 0 to 5 in a case where composition of the solder alloy was Sn-3Ag-0.5Cu.

It is conceivable that this is because the melting point of the solder alloy is 217 degrees C, the solvent in the flux volatilizes in the temperature zone in which the solder alloy is melted, so that the solvent do not remain in the molten solder alloy, thereby suppressing the scattering of the solder alloy if the rapid heating is carried out by the laser reflow.

In all of the executed examples 7 to 9 in which both of the solvent having the low boiling point and the solvent having the high boiling point were included, a ratio of the constituent of the solvent having the low boiling point in whole of the solvent was set to be higher than a predetermined value, occurrences of the solder balls were suppressed to a range of 0 to 5 in a case where composition of the solder alloy was Sn-3Ag-0.5Cu.

It is conceivable that this is because the solvent may remain in the molten solder alloy when the solvent contains the solvent having the high boiling point, but the solvent having the low boiling point volatilizes, so that a small amount of the solvent remains and the scattering is hard to occur.

Further, the measurement was carried out in the solder pastes in which the fluxes of the executed examples 1 to 6 were mixed with the solder alloy having the composition of Sn-57Bi and the melting point of 139 degrees C, so that occurrences of the solder balls were suppressed to a range of 0 to 5 or 6 to 10. It is conceivable that this is because the solvent in the flux does not perfectly volatilize in the temperature zone in which the solder alloy is melted but the solvent starts to volatilize even at the temperature that is lower than the boiling point of the solvent, so that an amount of the remained solvent is made smaller than a constant value, thereby suppressing the scattering of the solder alloy.

In addition, even when the composition of the solder alloy is Sn-57Bi, occurrences of the solder balls were suppressed to a range of 6 to 10 in the executed examples 6 to 9.

On the other hand, in all of the comparison examples 1 to 3 in which the solvent having the high boiling point was contained but the solvent having the low boiling point was not contained, occurrences of the solder balls were 11 or more in a case where composition of the solder alloy was Sn-3Ag-0.5Cu.

It is conceivable that this is because the melting point of the solder alloy is 217 degrees C, the solvent in the flux does not volatilize in the temperature zone in which the solder alloy is melted, so that the solvent remains in the molten solder alloy, thereby scattering the solder alloy when the rapid heating is carried out by the laser reflow.

In addition, in all of the comparison examples 1 to 3, occurrences of the solder balls were 11 or more in a case where composition of the solder alloy was Sn-57Bi.

In the comparison example 4 in which both of the solvent having the low boiling point and the solvent having the high boiling point were contained but a ratio of constituent of the solvent having the low boiling point in whole of the solvent was set to be less than a predetermined value, occurrence of the solder balls was 11 or more in a case where composition of the solder alloy was Sn-3Ag-0.5Cu. In the comparison example 4, occurrence of the solder balls was also 11 or more in a case where composition of the solder alloy was Sn-57Bi.

From the above results, it is determined that a desired effect is obtained when content of the solvent having the low boiling point in the flux is set to be not less than 20 weight % to not more than 40 weight %. Further, it is determined that a desired effect is also obtained when content of the solvent having the low boiling point in whole of the solvent is set to be not less than 60 weight % if both of the solvent having the low boiling point and the solvent having the high boiling point are contained.

### [INDUSTRIAL APPLICABILITY]

This invention is applicable to the soldering of an electronic component to which a rapid heating method such as a laser reflow, a halogen lamp, a hot air heating by heat gun or the like, heating by a soldering iron from a rear side of a substrate, and the like is applied.

## Claims

1. A flux for a rapid heating method **characterized in that** the flux comprises:
rosin;
a glycol-ether-based solvent;
an organic acid; and
a thixotropic agent, wherein the solvent is a glycol-based solvent having a low boiling point that is not more than 200 degrees C,
content of the solvent having the low boiling point is not less than 20 weight % to not more than 40 weight %, and
the solvent having the low boiling point of not less than 60 weight % in relation to the whole of the solvent is contained.

2. The flux for the rapid heating method according to Claim 1, **characterized in that** the solvent having the low boiling point contains dipropylene glycol monomethyl ether, propylene glycol monobutyl ether, diethylene glycol dimethyl ether, ethylene glycol monoallyl ether and ethylene glycol monoisopropyl ether.

3. A solder paste for a rapid heating method, **characterized in that** a solder alloy is mixed with the flux according to Claim 1 or 2.
